# EUROPEAN PATENT SPECIFICATION

(11) **EP 3 422 436 B1**
(45) Date of publication and mention of the grant of the patent: **26.02.2020**
(21) Application number: 18179083.3
(22) Date of filing: 21.06.2018
(51) Int. Cl.: H01M 2/10

(54) **BATTERY PACK**
BATTERIEPACK
BLOC-BATTERIE

(30) Priority: 26.06.2017 CN 201720751482 U
(43) Date of publication of application: 02.01.2019
(73) Proprietor: Contemporary Amperex Technology Co., Limited, Jiaocheng District Ningde City, Fujian 352100 (CN)
(72) Inventor: GU, Yanlong, Ningde City, Fujian 352100 (CN); YOU, Ruobo, Ningde City, Fujian 352100 (CN); HUANG, Xiaoteng, Ningde City, Fujian 352100 (CN); WU, Qiquan, Ningde City, Fujian 352100 (CN); ZHOU, Sha, Ningde City, Fujian 352100 (CN)
(74) Representative: Botti, Mario

(56) References cited:
- EP-A1- 2 337 142
- EP-A1- 2 599 156
- WO-A1-2017/045928
- US-A1- 2016 297 320

## Description

### TECHNICAL FIELD

The present application relates to the technical field of energy storage device and, particularly, relates to a battery pack.

### BACKGROUND

In order to exert the optimal power performance and to extend the service life of a battery or a battery module, an effective thermal management system is necessary to control the temperature of the battery or the battery module within the optimal temperature range. In the related art, liquid cooling systems with high-efficient heat transfer performance are favored by the battery manufacturers and vehicle manufacturers.

The liquid cooling system includes a liquid circulation pipeline arranged around the battery or the battery module. The liquid circulation pipeline closely contacts the battery or the battery module, and they exchange heat by means of heat transfer, thereby controlling the temperature of the battery or the battery module.

In EP 2 337 142 A1, a vehicle drive battery assembly is provided. The battery assembly includes a plurality of battery cells arranged next to each other, and a cooling apparatus. The cooling apparatus includes at least one cooling base which extensively bears against the underside of the battery, at least one coolant pipe, at least one heat conducting contact plate for contacting the underside and at least one carrier component that forms a bracket for the coolant pipe and the contact plate. The cooling base is formed to be spring elastic relative to the underside and the contact plate bears extensively and in a pre-biased manner against the underside.

A cooling module for active cooling of a battery is known in WO 2017/045928 A1. The cooling module includes a flat tube having at least one channel for receiving a cooling medium, and a metallic contact element for forming a heat-conductive contact between a side face of the flat tube and a contact face of the battery. The metallic contact element has at least one spring element configured to be braced spring-elastically between the flat tube and the contact face of the battery.

EP 2 599 156 A1 discloses a cooling device for a vehicle battery with at least one coolant line and at least one separate clamping element made of an elastic material, for pressing the coolant line directly up against a flat surface of the vehicle battery. The coolant line is flat, with an essentially flat upper surface for contact with the flat face of the vehicle battery.

Therefore, how to guarantee an effective contact between the liquid circulation pipeline and the battery or the battery module is a crucial technology in the thermal management system of the battery pack.

### SUMMARY

The present application provides a battery pack, which can ensure an effective contact between a heat exchange piece and a battery module, and thus improve the efficiency of heat exchange.

The present application provides a battery pack, including a case, a battery module placed in the case, an elastic supporting piece, and a heat exchange piece for exchanging heat
with the battery module,
the elastic supporting piece includes an intermediate portion, a first portion and a second portion, the first portion and the second portion respectively extend from the intermediate portion in opposite directions, and the intermediate portion protrudes beyond the first portion and the second portion in a direction perpendicular to the extending directions of the first portion and the second portion
the intermediate portion has a contact surface, an external force is applied on the first portion and the second portion and further applied on the heat exchange piece through the contact surface of the intermediate portion, and under action of the external force, the heat exchange piece is brought into close contact with the battery module by the intermediate portion.

Preferably, at least one of the first portion and the second portion include a flat plate, a normal of the flat plate is perpendicular to the extending direction of the first portion, and the external force is applied on the flat plate.

Preferably, the intermediate portion includes a first transition segment, a main segment and a second transition segment, the first transition segment, the main segment and the second transition segment are sequentially connected to one another, the contact surface is a surface of the main segment facing the heat exchange piece,
one end of the main segment is transitionally connected to the first portion via the first transition segment, and the other end of the main segment is transitionally connected to the second portion via the second transition segment,
at least one of the first transition segment and the second transition segment include an arc segment.

Preferably, a plurality of the elastic supporting pieces are provided, and the first portion of one of two adjacent elastic supporting pieces is connected to the second portion of the other one of the two adjacent elastic supporting pieces.

Preferably, the battery pack further includes a bridging piece, through which the elastic supporting piece is connected with the heat exchange piece, and the bridging piece is a heat insulator.

Preferably, the bridging piece includes a body and a gripping portion, one end of the gripping portion is connected to the body, and the other end of the gripping portion is a free end,
the elastic supporting piece is clamped in a spacing defined between the free end and the body.

Preferably, the bridging piece includes a first clamping portion and a first positioning portion, and the elastic supporting piece includes a second clamping portion and a second positioning portion,
the first clamping portion is clamped with the second clamping portion,
the first positioning portion is aligned with the second positioning portion in a direction perpendicular to a clamping direction of the first clamping portion with the second clamping portion.

Preferably, a plurality of the elastic supporting pieces are provided and arranged with interval in an extending direction of the heat exchange piece.

Preferably, the heat exchange piece is in contact with the bottom of the battery module.

The technical solutions provided by the present application can achieve the following beneficial effects:

The present application provides a battery pack including an elastic supporting piece, which further includes an intermediate portion, a first portion and a second portion respectively extending from the intermediate portion in opposite directions, the intermediate portion protrudes beyond the first portion and the second portion in a direction perpendicular to the extending directions of the first portion and the second portion. Since the first portion and the second portion extend respectively to the sides away from the intermediate portion, the size of the elastic supporting piece increases in the extending directions. The amount of deformation of the elastic supporting piece in a direction perpendicular to the extending directions is relatively great, due to the external force applied on the first portion and the second portion. Since the elastic supporting piece is an energy storage component, therefore, the greater the amount of deformation thereof, the more the energy stored, and the greater the force applied to the heat exchange piece, and thus the closer the contact between the heat exchange piece and the battery module. Therefore, the elastic supporting piece can provide the heat exchange piece with sufficient supporting force, which ensures that the battery module can be brought into reliable contact with the heat exchange piece, thereby reducing the heat transfer resistance therebetween, and improving the heat transfer efficiency between the battery module and the heat exchange piece.

It should be understood that, the above general description and the following detailed description are just exemplary, which are not intended to limit the present application.

### BRIEF DESCRIPTION OF DRAWINGS

FIG. 1 is a schematic diagram of a battery pack provided in an embodiment of the present application;
FIG. 2 is a schematic diagram of an elastic supporting piece provided in an embodiment of the present application;
FIG. 3 is a schematic diagram of an elastic supporting piece provided in an embodiment of the present application, the elastic supporting piece including a plurality of arc segments;
FIG. 4 is a schematic diagram of a bridging piece provided in an embodiment of the present application;
FIG. 5 is a schematic diagram of a first embodiment of connection between the elastic supporting piece and the bridging piece provided by the present application;
FIG. 6 is a schematic diagram of a second embodiment of connection between the elastic supporting piece and the bridging piece provided by the present application;
FIG. 6a is a schematic diagram of an embodiment in which the elastic supporting piece is connected to the bridging piece in a different manner, as provided in an embodiment of the present application;
FIG. 7 is a schematic diagram of a plurality of elastic supporting pieces provided in an embodiment of the present application; and
FIG. 8 is a schematic diagram of a heat exchange piece provided in an embodiment of the present invention, the heat exchange piece being in contact with the bottom of a battery module.

### Reference signs:

2 - battery module;
3 - elastic supporting piece;
   31 - intermediate portion;
      31a - contact surface;
      311 - first transition segment;
         311a - arc segment;
      312 - main segment;
      313 - second transition segment;
   32 - first portion;
      32a - flat plate;
   33 - second portion;
   34 - second clamping portion;
   35 - second positioning portion;
4 - heat exchange piece;
5 - bridging piece;
   51- body;
   52 - clamping jaw;
   53 - gripping portion;
   54 - first clamping portion;
   55 - first positioning portion.

The figures are incorporated into the specification as a part of the specification, which show embodiments of the present application, and are used to illustrate the principle of the present application together with the specification.

### DESCRIPTION OF EMBODIMENTS

The present application will be further described as follows by means of specific embodiments and with reference to the accompanying drawings.

The present application provides a battery pack, as a power element for providing power to an electric device such as an electric vehicle or the like. A huge amount of heat will be generated when using the battery pack, which may result in a deterioration of its performance or even serious accidents, when the temperature of the battery pack is excessively high. Therefore, the present application provides a battery pack capable of ensuring an effective contact of the heat exchange system with a battery module in the battery pack, thereby improving the efficiency of heat exchange of the battery module.

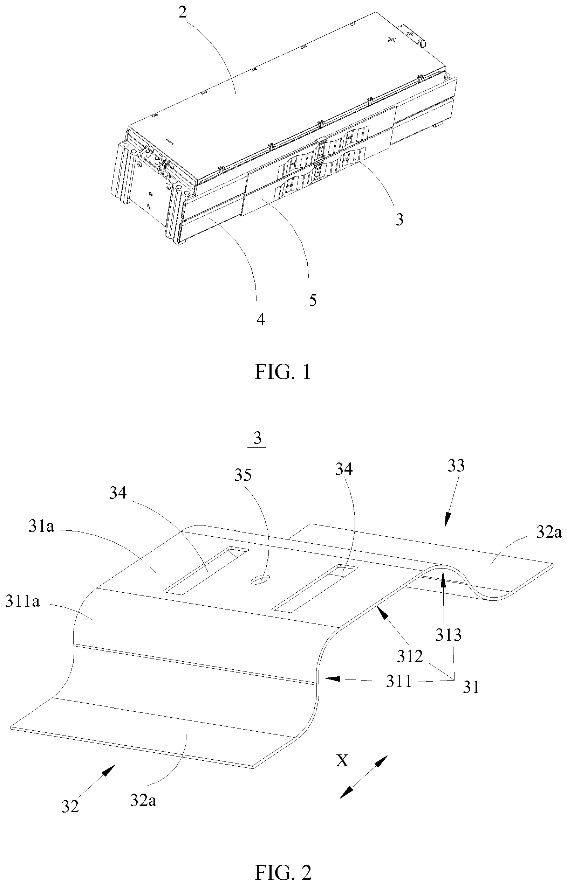

Specifically, the battery pack, as shown in Fig. 1, includes a case (not shown in the figure), a battery module 2 placed in the case, an elastic supporting piece 3, and a heat exchange piece 4 for exchanging heat with the battery module 2, wherein the heat exchange piece 4 is in contact with the battery module 2.

The elastic supporting piece 3 provides supporting force for the heat exchange piece 4, so that the heat exchange piece 4 can be in close contact with the battery module 2. As shown in Fig. 2, the elastic supporting piece 3 includes an intermediate portion 31, a first portion 32 and a second portion 33. The first portion 32 and the second portion extend from the intermediate portion 31 in opposite directions respectively, and the intermediate portion 31 protrudes beyond the first portion 32 and the second portion 33 in a direction perpendicular to the extending direction of the first portion 32 and the second portion 33 (X direction shown in Fig. 2).

An external force is applied on the elastic supporting piece 3 through the first portion 32 and the second portion 33, and under the action of the external force, the heat exchange piece 4 is brought into contact with the battery module 2 via the intermediate portion 31. When the heat exchange piece 4 is provided at the bottom of the battery pack, the external force can be provided by the battery module, i.e. the external force is the gravity of the battery module. In addition, the external force can also be provided by such as a case adjacent to the battery module, or other adjacent battery modules. The case or other battery modules press the elastic supporting piece 3 to produce the external force.

In the above-described embodiment, since the first portion 32 and the second portion 33 extend to the sides away from the intermediate portion 31 respectively, the size of the elastic supporting piece 3 increases in the extending directions. The amount of deformation of the elastic supporting piece 3 in a direction perpendicular to the extending directions is relatively great, due to the external force applied on the first portion 32 and the second portion 33. It is known that the elastic supporting piece 3 is an energy storage component, therefore, the greater the amount of deformation thereof, the more the energy stored, and accordingly, the greater the force applied to the heat exchange piece 4 by the elastic supporting piece 3, and thus the closer the contact between the heat exchange piece 4 and the battery module 2. Thus, the elastic supporting piece 3 can provide sufficient supporting force for the heat exchange piece 4 so that the battery module 2 can be brought into reliable contact with the heat exchange piece 4, thereby reducing the heat transfer resistance therebetween, and improving the heat transfer efficiency between the battery module 2 and the heat exchange piece 4.

The specific structure of the elastic supporting piece 3 is not unique. In the embodiment shown in Fig. 2, it is preferred that the first portion 32 and the second portion 33 of the elastic supporting piece 3 both include a flat plate 32a, the normal of which is perpendicular to the extending direction of the first portion 32, and the external force can be applied on the flat plate 32a. With this arrangement, the external force can be easily applied to the first portion 32 and the second portion 33 through the plate 32a, without producing a component force in other directions, and when the external force is applied to the plate 32a in the normal direction, the highest efficiency of the external force can be achieved. Without doubt, in other embodiments, it is also possible that one of the first portion 32 and the second portion 33 includes a flat plate 32a.

Further, the intermediate portion 31 has a contact surface 31a, through which the external force can be applied to the heat exchange piece 4. The contact surface 31a can increase the contact area between the intermediate portion 31 and the heat exchange piece 4, so as to ensure that the external force can be reliably applied on the heat exchange piece 4 through the intermediate portion 31.

It can also be seen from Fig. 2 that, the intermediate portion 31 includes a first transition segment 311, a main segment 312, and a second transition segment 313, which are sequentially connected to one another. One end of the main segment 312 is transitionally connected to the first portion 32 via the first transition segment 311, and the other end of the main segment 312 is transitionally connected to the second portion 33 via the second transition segment 313. At this time, the contact surface 31a is a surface of the main segment 312 facing the heat exchange piece 4.

In the present application, at least one of the first transition segment 311 and the second transition segment 313 includes an arc segment 311a, which enables a smooth transition between the intermediate portion 31 and the first portion 32, thereby avoiding stress concentration between the first portion 32 and the intermediate portion 31 when the external force is applied. In this way, a permanent plastic deformation of the elastic supporting piece 3 is avoided, so that the elastic supporting piece 3 can provide a reliable support for the heat exchange piece 4.

As the embodiment shown in Fig. 2, each of the first transition segment 311 and the second transition segment 313includes an arc segment 311a.

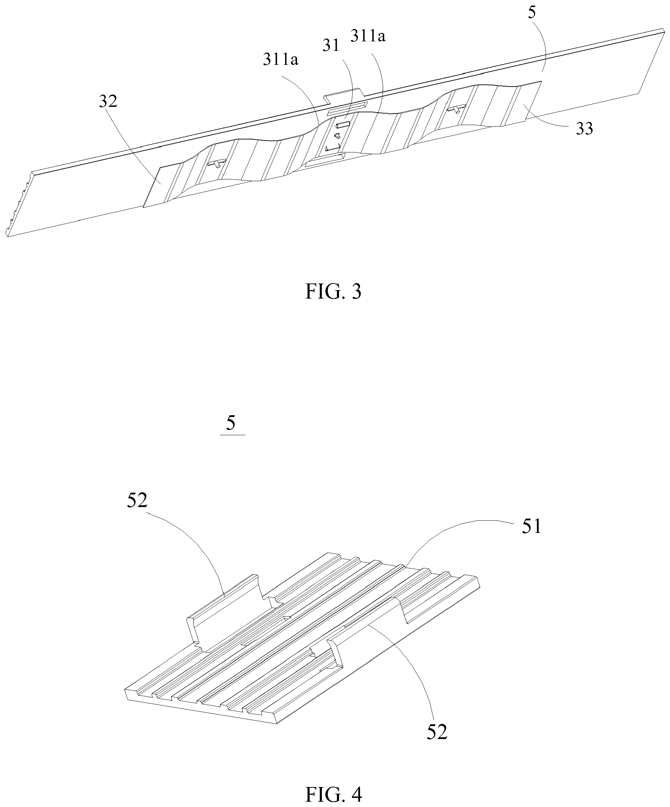

A plurality of elastic supporting pieces 3 can be provided, as shown in Fig.3, and the first portion 32 of one of two adjacent elastic supporting pieces 3 is connected to the second portion 33 of the other one of the two adjacent elastic supporting pieces 3. With this arrangement, the plurality of elastic supporting pieces 3 is in contact with the heat exchange piece 4 through the contact surfaces 31a, thereby increasing the number of contact points between the elastic supporting pieces 3 and the heat exchange piece 4. That is, the elastic supporting pieces 3 provide a multi-point support for the heat exchange piece 4, and thus the supporting structure is more stable and reliable.

The elastic supporting piece 3 can be made of stainless steel pieces of SUS301 model, the thickness of which can be 0.1mm, 0.15mm, 0.2mm, 0.25mm and the like. The selection of the thickness should mainly consider that, on the one hand, stainless steel pieces should have good elastic property and great extent of compression, and the tolerance of installation can be compensated during installing; the other hand, the stainless steel pieces should have small thickness, be light-weight and conducive to improving the energy density of the battery pack.

In the solutions described above, it is not limited whether there is a connection between the elastic supporting piece 3 and the heat exchange piece 4. In an embodiment, they contact with one another under the external force, instead of a connection in physical structure therebetween; in another embodiment, the elastic supporting piece 3 can be bonded or screwed to the heat exchange piece 4.

In the embodiment shown in Fig. 3, the battery also includes a bridging piece 5, through which the elastic supporting 3 is connected with the heat exchange piece 4, so that the elastic supporting piece 3 is not in direct contact with the heat exchange piece 4 any further. Since the bridging piece 5 is a heat insulator, the heat transfer between the heat exchange piece 4 and the elastic supporting piece 3 is reduced, thereby reducing the risk that the elastic property of the elastic supporting piece 3 deteriorates by the heat.

Specifically, as shown in Fig. 4, the bridging piece 5 includes a body 51 and two clamping jaws 52 connected to the body 51 and arranged opposite to one another. The bridging piece 5 is clamped and fixed to the heat exchange piece 4 by the two clamping jaws 52, and the elastic supporting piece 3 is mounted on the body 51.

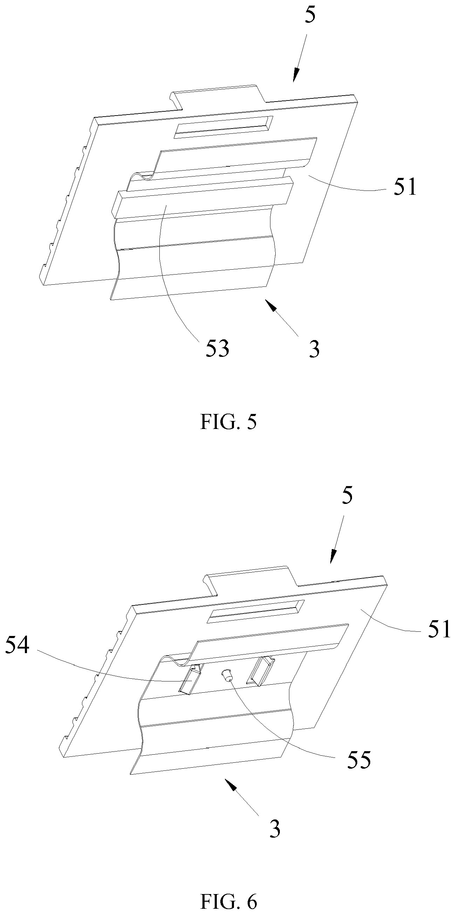

There is a variety of solutions of the connection between the elastic supporting piece 3 and the bridging piece 5. In an embodiment shown in Fig. 5, the bridging piece 5 further includes a gripping portion 53, one end of which is connected to the body 51, and the other end of which is a free end. The elastic supporting piece 3 is clamped in a spacing defined between the free end and the body 51. This arrangement facilitates the connection between the bridging piece 5 and the elastic supporting piece 3, and the elastic supporting piece 3 and the bridging piece 5 can still be held in a relatively stable connection, since the direction of the external force is perpendicular to the direction in which the supporting piece 3 is released from the spacing.

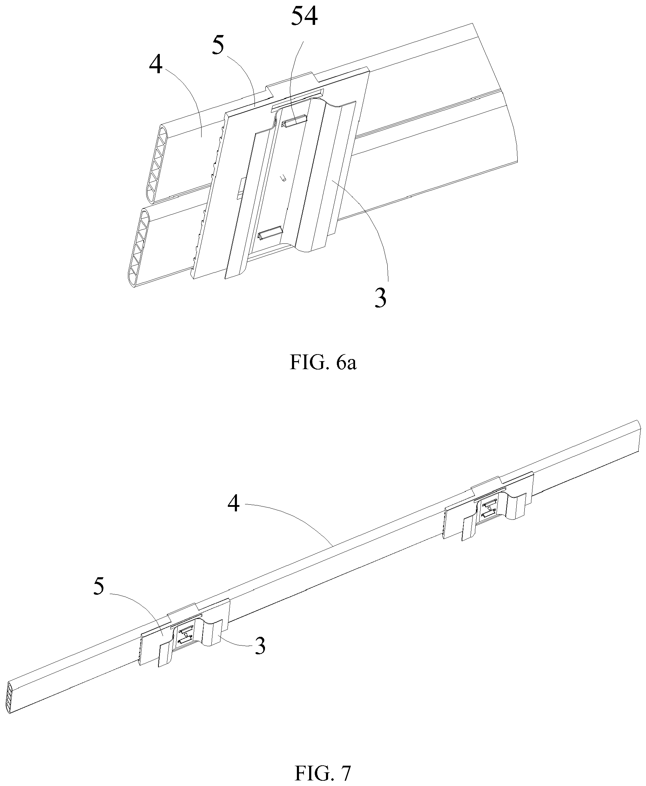

Optionally, in other embodiments, as shown in Fig. 2 and Fig. 6, the bridging piece 5 can further include a first clamping portion 54 and a first positioning portion 55, the elastic supporting piece 3 includes a second clamping portion 34 and a second positioning portion 35. The first clamping portion 54 is clamped with the second clamping portion 34, and the first positioning portion 55 is aligned with the second positioning portion 35. The direction of positioning is perpendicular to the direction in which the first positioning portion 54 is clamped with the second positioning portion 34.

According to an embodiment, as shown in Fig. 6, the first clamping portion 54 is embodied as a wedge-shaped clamping foot, while the second clamping portion 34 as a clamping hole; the first positioning portion 55 is embodied as a positioning pin, while the second positioning portion 35 as a pin hole. The positioning pin is inserted into the pin hole in an axial direction thereof, and they are positioned in a radial direction of the pin hole. In this case, the direction of positioning is perpendicular to the direction in which the first clamping portion 54 is engaged with the second clamping portion 34.

In the solutions described above, the positioning of the first positioning portion 55 and the second positioning portion 35 facilitates the alignment of the first clamping portion 54 and the second clamping portion 34, so as to provide a quick clamping, thereby improving assembling efficiency and the accuracy of the mounting position of the bridging piece 5 and the heat exchange piece 4.

It is easy to understand that, in other embodiments, the first clamping portion 54 and the second clamping portion 34, the first positioning portion 55 and the second positioning portion 35 all have alternative embodiments.

In addition, the elastic supporting piece 3 can be rotated by 90°, as shown in Fig. 6a, the positions of the first clamping portion 54 and second clamping portion 34 can be adjusted accordingly. At this time, a longitudinal direction of the strip-shaped first portion 32 and second portion 33 is perpendicular to a longitudinal direction of the heat exchange piece 4, so that the elastic supporting piece 3 can be connected with the bridging piece 5 in different manners, thereby providing a more flexible connection therebetween.

The bridging piece 5 can be made of nylon. In the present embodiment, the bridging piece 5 is made of reinforced nylon material added with 30% glass fiber, in order to improve the heat insulation effect and strength thereof, and thus realizing the function of connecting and positioning.

As shown in Fig. 7, a plurality of the elastic supporting pieces 3 can be provided and arranged with interval therebetween in the extending direction of the heat exchange piece 4. The plurality of elastic supporting pieces 3 realize the multi-point support for the heat exchange piece 4, thereby ensuring that the contact force between the heat exchange piece 4 and the battery module 2 can be more uniformly distributed over the entire contact area, thereby further reducing the heat transfer resistance between the battery module 2 and the heat exchange piece 4.

Further, it is also possible to provide a plurality of bridging pieces 5 and a plurality of elastic supporting pieces 3. The number of the bridging piece 5 should be in one to one correspondence with that of the elastic supporting piece 3.

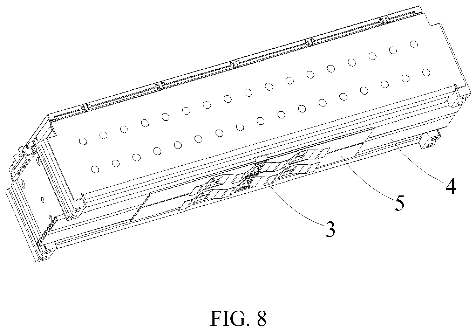

As shown in Fig. 8, considering that the battery module 2 is placed on a substrate at the bottom of the battery pack, the heat exchange piece 4 can be arranged at the bottom of the battery module 2, in this way, the heat transferred from the battery module 2 to the substrate can quickly escape through the heat exchange piece 4.

Without doubt, the present application is not limited to the above-described embodiments. The heat exchange piece 4, as shown in Fig. 1, can be provided on one side of the battery module 2, for example, the heat exchange piece 4 is in contact with a side plate or an end plate in the case, achieving the heat exchange with the battery module 2.

The above are just the preferred embodiments of the present application, which are not intended to limit the present application. Those skilled in the art are able to derive various modifications and variations of the present application within the scope of the appended claims.

## Claims

1. A battery pack comprising a case, a battery module (2) placed in the case, an elastic supporting piece (3), and a heat exchange piece (4) for exchanging heat with the battery module,
wherein the elastic supporting piece comprises an intermediate portion (31), a first portion (32) and a second portion (33), the first portion and the second portion respectively extend from the intermediate portion in opposite directions, and the intermediate portion protrudes beyond the first portion and the second portion in a direction perpendicular to the extending directions of the first portion and the second portion,
the intermediate portion has a contact surface (31a), an external force is applied on the first portion and the second portion and further applied on the heat exchange piece through the contact surface of the intermediate portion, and under action of the external force, the heat exchange piece is brought into close contact with the battery module by the intermediate portion.

2. The battery pack according to claim 1, **characterized in that**, at least one of the first portion and the second portion comprises a flat plate, a normal of the flat plate is perpendicular to the extending direction of the first portion, and the external force is applied on the flat plate.

3. The battery pack according to claim 1, **characterized in that**, the intermediate portion comprises a first transition segment, a main segment and a second transition segment, the first transition segment, the main segment and the second transition segment are sequentially connected to one another,
the contact surface is a surface of the main segment facing the heat exchange piece,
one end of the main segment is transitionally connected to the first portion via the first transition segment, and the other end of the main segment is transitionally connected to the second portion via the second transition segment,
at least one of the first transition segment and the second transition segment comprises an arc segment.

4. The battery pack according to claim 1, **characterized in** comprising a plurality of the elastic supporting pieces, the first portion of one of two adjacent elastic supporting pieces is connected to the second portion of the other one of the two adjacent elastic supporting pieces.

5. The battery pack according to any one of claims 1-4, **characterized in** further comprising a bridging piece, through which the elastic supporting piece is connected with the heat exchange piece, and the bridging piece is a heat insulator.

6. The battery pack according to claim 5, **characterized in that**, the bridging piece comprises a body and a gripping portion, one end of the gripping portion is connected to the body, and the other end of the gripping portion is a free end,
the elastic supporting piece is clamped in a spacing defined between the free end and the body.

7. The battery pack according to claim 5, **characterized in that**, the bridging piece comprises a first clamping portion and a first positioning portion, and the elastic supporting piece comprises a second clamping portion and a second positioning portion,
the first clamping portion is clamped with the second clamping portion,
the first positioning portion is aligned with the second positioning portion in a direction perpendicular to a clamping direction of the first clamping portion with the second clamping portion.

8. The battery pack according to any one of claims 1-4, **characterized in** comprising a plurality of the elastic supporting pieces arranged with interval in an extending direction of the heat exchange piece.

9. The battery pack according to any one of claims 1-4, **characterized in that**, the heat exchange piece is in contact with the bottom of the battery module.

## Patentansprüche

1. Batteriepack,
umfassend ein Gehäuse, ein in dem Gehäuse platziertes Batteriemodul (2), ein elastisches Trägerteil (3), und ein Wärmeaustauschteil (4) zum Austauschen von Wärme mit dem Batteriemodul,
wobei das elastische Trägerteil einen Zwischenabschnitt (31), einen ersten Abschnitt (32) und einen zweiten Abschnitt (33) umfasst,
wobei sich der erste Abschnitt und der zweite Abschnitt jeweils von dem Zwischenabschnitt in entgegengesetzte Richtungen erstrecken, und der Zwischenabschnitt jenseits des ersten Abschnitts und jenseits des zweiten Abschnitts in einer Richtung vorsteht, die senkrecht zu den Erstreckungsrichtungen des ersten Abschnitts und des zweiten Abschnitts ist,
der Zwischenabschnitt eine Kontaktoberfläche (31a) aufweist, eine äußere Kraft auf den ersten Abschnitt und den zweiten Abschnitt aufgebracht wird und ferner auf das Wärmeaustauschteil durch die Kontaktoberfläche des Zwischenabschnitts aufgebracht wird, und unter Wirkung der äußeren Kraft, das Wärmeaustauschteil durch den Zwischenabschnitt in engen Kontakt mit dem Batteriemodul gebracht wird.

2. Batteriepack nach Anspruch 1, **dadurch gekennzeichnet, dass** wenigstens einer des ersten Abschnitts und des zweiten Abschnitts eine flache Platte umfasst, eine Normale der flachen Platte senkrecht zu der Erstreckungsrichtung des ersten Abschnitts ist, und die äußere Kraft auf die flache Platte aufgebracht wird.

3. Batteriepack nach Anspruch 1, **dadurch gekennzeichnet, dass** der Zwischenabschnitt ein erstes Übergangssegment, ein Hauptsegment und ein zweites Übergangssegment umfasst, das erste Übergangssegment, das Hauptsegment und das zweite Übergangssegment sequentiell miteinander verbunden sind,
die Kontaktoberfläche eine Oberfläche des Hauptsegments ist, die dem Wärmeaustauschteil zugewandt ist,
ein Ende des Hauptsegments mit dem ersten Abschnitt über das erste Übergangssegment übergangsmäßig verbunden ist, und das andere Ende des Hauptsegments mit dem zweiten Abschnitt über das zweite Übergangssegment übergangsmäßig verbunden ist,
wenigstens eines des ersten Übergangssegments und des zweiten Übergangssegments ein Bogensegment umfasst.

4. Batteriepack nach Anspruch 1, **dadurch gekennzeichnet, dass** es eine Vielzahl der elastischen Trägerteile umfasst, der erste Abschnitt von einem von zwei angrenzenden elastischen Trägerteilen mit dem zweiten Abschnitt des anderen der zwei angrenzenden elastischen Trägerteile verbunden ist.

5. Batteriepack nach einem der Ansprüche 1 - 4, **dadurch gekennzeichnet, dass** es ferner ein Überbrückungsteil umfasst, durch welches das elastische Trägerteil mit dem Wärmeaustauschteil verbunden ist, und das Überbrückungsteil ein Wärmeisolator ist.

6. Batteriepack nach Anspruch 5, **dadurch gekennzeichnet, dass** das Überbrückungsteil einen Körper und einen Greifabschnitt umfasst, ein Ende des Greifabschnitts mit dem Körper verbunden ist, und das andere Ende des Greifabschnitts ein freies Ende ist,
das elastische Trägerteil in einen Abstand geklemmt ist, der zwischen dem freien Ende und dem Körper definiert ist.

7. Batteriepack nach Anspruch 5, **dadurch gekennzeichnet, dass** das Überbrückungsteil einen ersten Klemmabschnitt und einen ersten Positionierabschnitt umfasst, und das elastische Trägerteil einen zweiten Klemmabschnitt und einen zweiten Positionierabschnitt umfasst,
der erste Klemmabschnitt mit dem zweiten Klemmabschnitt verklemmt ist,
der erste Positionierabschnitt mit dem zweiten Positionierabschnitt in einer Richtung fluchtend ausgerichtet ist, die senkrecht zu einer Klemmrichtung des ersten Klemmabschnitts mit dem zweiten Klemmabschnitt ist.

8. Batteriepack nach einem der Ansprüche 1 - 4, **dadurch gekennzeichnet, dass** es eine Vielzahl der elastischen Trägerteile umfasst, die mit einem Intervall in einer Erstreckungsrichtung des Wärmeaustauschteils angeordnet sind.

9. Batteriepack nach einem der Ansprüche 1 - 4, **dadurch gekennzeichnet, dass** das Wärmeaustauschteil in Kontakt mit dem Boden des Batteriemoduls ist.

## Revendications

1. Bloc de batterie comprenant un boîtier, un module de batterie (2) placé dans le boîtier, une pièce support élastique (3) et une pièce d'échange thermique (4) pour échanger de la chaleur avec le module de batterie,
la pièce support élastique comprend une partie intermédiaire (31), une première partie (32) et une deuxième partie (33), la première partie et la deuxième partie s'étendant respectivement à partir de la partie intermédiaire dans des directions opposées, et la partie intermédiaire dépassant au-delà de la première partie et de la deuxième partie dans une direction perpendiculaire aux directions d'extension de la première partie et de la deuxième partie,
la partie intermédiaire présentant une surface de contact (31a), une force externe étant appliquée par le biais de la surface de contact de la partie intermédiaire sur la première partie et la deuxième partie et en outre sur la pièce d'échange thermique, et sous l'action de la force externe, la pièce d'échange thermique étant amenée en contact étroit avec le module de batterie par la partie intermédiaire.

2. Bloc de batterie selon la revendication 1, **caractérisé en ce qu'**au moins l'une de la première partie et de la deuxième partie comprend une plaque plate, une normale à la plaque plate étant perpendiculaire à la direction d'extension de la première partie, et la force externe étant appliquée sur la plaque plate.

3. Bloc de batterie selon la revendication 1, **caractérisé en ce que** la partie intermédiaire comprend un premier segment de transition, un segment principal et un deuxième segment de transition, le premier segment de transition, le segment principal et le deuxième segment de transition étant reliés l'un à l'autre de manière consécutive,
la surface de contact est une surface du segment principal tournée vers la pièce d'échange thermique,
une extrémité du segment principal est reliée de façon transitionnelle à la première partie par l'intermédiaire du premier segment de transition, et l'autre extrémité du segment principal est reliée de façon transitionnelle à la deuxième partie par l'intermédiaire du deuxième segment de transition,
au moins l'un du premier segment de transition et du deuxième segment de transition comprend un segment d'arc.

4. Bloc de batterie selon la revendication 1, **caractérisé en ce qu'**il comprend une pluralité de pièces support élastiques, la première partie d'une de deux pièces support élastiques adjacentes est reliée à la deuxième partie de l'autre des deux pièces support élastiques adjacentes.

5. Bloc de batterie selon l'une quelconque des revendications 1 à 4, **caractérisé en ce qu'**il comprend en outre une pièce de pontage, à l'aide de laquelle la pièce support élastique est reliée à la pièce d'échange thermique, et la pièce de pontage est un isolant thermique.

6. Bloc de batterie selon la revendication 5, **caractérisé en ce que** la pièce de pontage comprend un corps et une partie de prise, une extrémité de la partie de prise étant reliée au corps, et l'autre extrémité de la partie de prise étant une extrémité libre,
la pièce support élastique est bloquée dans un espace défini entre l'extrémité libre et le corps.

7. Bloc de batterie selon la revendication 5, **caractérisé en ce que** la pièce de pontage comprend une première partie de blocage et une première partie de positionnement, et la pièce support élastique comprend une deuxième partie de blocage et une deuxième partie de positionnement,
la première partie de blocage est bloquée avec la deuxième partie de blocage,
la première partie de positionnement est alignée avec la deuxième partie de positionnement dans une direction perpendiculaire à une direction de blocage de la première partie de blocage avec la deuxième partie de blocage.

8. Bloc de batterie selon l'une quelconque des revendications 1 à 4, **caractérisé en ce qu'**il comprend une pluralité de pièces support élastiques disposées à intervalle dans une direction d'extension de la pièce d'échange thermique.

9. Bloc de batterie selon l'une quelconque des revendications 1 à 4, **caractérisé en ce que** la pièce d'échange thermique est en contact avec le fond du module de batterie.
